# EUROPEAN PATENT APPLICATION

(11) **EP 3 073 338 A1**
(43) Date of publication of application: **28.09.2016**
(21) Application number: 16161931.7
(22) Date of filing: 23.03.2016
(51) Int. Cl.: G05B 19/409, F24F 11/00, H05B 37/02

(54) **SMART CONTROL DEVICE**

(30) Priority: 26.03.2015 BE 201505184
(71) Applicant: Niko NV, 9100 Sint-Niklaas (BE)
(72) Inventor: DE BRABANDER, Gino, 9112 Sinaai (BE); HEYRMAN, Koen, 9120 Melsele (BE); TAS, Johan, 9100 Sint-Niklaas (BE); VAN HAVER, Karel Jan Christiane, 9940 Evergem (BE); DESMET, Arne, 8500 Kortrijk (BE); De Brabander, Peter, 9100 Nieuwkerken-Waas (BE)
(74) Representative: D'Halleweyn, Nele Veerle Trees Gertrudis

(57) **Abstract**

The present invention provides a control device for controlling an electric or electronic device. The control device comprises a user input interface comprising a translucent front cover, a dynamic reconfigurable function indication means adapted for showing different information at different times and a user input means, controlling circuitry or control logic for controlling the electric or electronic device, and means for connecting the control device to a remote configuring device for configuring the control device. Configuration of a control device according to embodiments of the invention is fully reversible, which makes it possible for an installer or a user to change the functionalities or to add and/or remove functionalities at all times without the need to make a change to the control device's hardware or to replace any parts of the control device.

## Description

### Technical field of the invention

The present invention relates to a control device for controlling an electric or electronic device.

More particularly, the present invention relates to a smart control device which can be easily configured and reconfigured to a desired configuration by an installer or a user and to a method for configuring such a control device.

### Background of the invention

Typically, control devices for controlling an electric or electronic device, such as for example a switch, a dimmer, shutters, heating and/or cooling systems, ventilation systems, ..., are either dedicated to a particular function or are very general. Dedicated control devices have known fixed functionality. For example, for a dimmer this can be on/off, dim up, dim down, .... For such control devices, the user interface can be provided with a set of fixed markings for particular functions such as, for example, a lamp symbol, arrow up, arrow down, .... Typically, for specific controls, i.e. controls dedicated to a specific function, such markings are added onto the interface during manufacturing. For more general controls this is not the case. Because for such general controls the function is not predefined during manufacturing, it is not possible to add predefined markings onto the user interface. One possibility is to mark the user interface after installation according to the functionality of the control device. A user then may have to, for example, add on markings such as stickers or labels or order a custom printed interface. This is very inconvenient, especially when a user wants to change the functionality of the control device, because then the whole labelling process starts over again or he has to order a new custom printed interface.

Some existing general control devices already provide partial solutions to the above problem. For example, EP 2 665 189 describes a control device, also referred to as capacitive control push-button panel, for residential electrical series. The control device comprises a front panel with a plurality of screen-printed icons on the back. The screen-printed icons are arranged so as to cover possible control configurations. Further, the control device comprises a printed circuit board with a plurality of sensitive areas, of which each one can be associated to a desired command, and a plurality of back-lighting LEDs provided in each of the sensitive areas and between pairs of adjacent areas and arranged in alignment with the plurality of icons on the front panel. The sensitive areas can be selectively activated by software, so as to determine particular configurations of the push-button panel. A disadvantage of the control device of EP 2 665 189 is that, due to the use of screen-printed icons, the icons are predefined and thus changing the functionality of the control device to functions different from the predefined ones is not possible. The only way to change the icons and thus the predefined functionalities is to change the electronics (printed circuit board, ...) as well as the mechanics (front plate, ...) of the control device.

### Summary of the invention

It is an object of embodiments of the present invention to provide a control device for controlling an electric or electronic device of which the functions can be easily configured and reconfigured by an installer or a user if required and to provide a method for configuring such a control device.

The above objective is accomplished by a method and device according to embodiments of the present invention.

In a first aspect, the present invention provides a control device for controlling an electric or electronic device. The control device comprises a user input interface comprising a translucent front cover, a dynamic reconfigurable function indication means and a user input means. The control device further comprises controlling circuitry or control logic for controlling the electric or electronic device, means for connecting the control device to a remote configuring device for configuring the control device. The dynamic reconfigurable function indication means is adapted for showing different information at different times. On the one hand, the dynamic reconfigurable function indication means may be adapted to show the available functions, such as dimming, shutter control, heating and/or cooling control, ventilation control, ... to the user. On the other hand, the dynamic reconfigurable function indication means may be adapted to show feedback such as, for example in case of a dimmer, the dimming level during and/or after control. In other words, the dynamic reconfigurable function indication means may be adapted to show different functions and/or feedback on the status of these functions.

An advantage of a control device according to embodiments of the invention is that configuration of the control device is fully reversible, which makes it possible for an installer or a user to change the functionalities or to add/remove functionalities at all times without the need to make a change to the control device's hardware or to replace any parts of the control device. In other words, the design of the control device does not have to be adapted when functionalities need to be changed, when new functionalities need to be added and/or when functionalities have to be replaced with another one. Furthermore, there is no limit in the number of functionalities that can be configured in the control device. Hence, a control device according to embodiments of the invention can fit all control needs for a particular user.

Another advantage of a control device according to embodiments of the invention is that it is easy to install and only one product is needed for all required control needs. As described above, the control device can be easily configured and reconfigured whenever necessary. Hence, unlike prior art control devices, when control needs change, no additional parts or new parts have to be bought for the control device. The control device can simply be reconfigured by the installer or even by the user himself according to the changed needs.

According to embodiments of the invention, the dynamic reconfigurable function indication means may comprise a LED matrix, an LCD, an OLED LCD or any other suitable indication means as known by a person skilled in the art.

The user input means may, according to embodiments of the invention, at least one capacitive area, at least one inductive area, at least one resistive area, at least one tactile switch or a touch layer or touch panel. The user input means may, for example, be provided in a particular pattern, so as to make it easier to use.

The remote configuring device may be a computer, a tablet or a mobile phone. The means for connecting the control device to the remote configuring device may be adapted to provide a wireless connection or may be adapted to provide a wired connection.

According to embodiments of the invention, the control device may be a stand-alone control device. According to such embodiments, the controlling circuitry or control logic may be part of the control device or may be located external to the control device, near the electric or electronic device to be controlled.

According to other embodiments of the invention, the control device may be part of a home automation system. According to such embodiments, the controlling circuitry or control logic may be incorporated in the home automation system.

According to embodiments of the invention, the control device may furthermore comprise a back cover for covering a back part of the user input interface.

In a second aspect, the present invention provides a method for configuring a control device according to embodiments of the invention. The control device comprising a user input interface comprising a translucent front cover, a dynamic reconfigurable function indication means for showing different information at different times and a user input means, controlling circuitry for controlling the electric or electronic device, and means for connecting to a remote configuring device for configuring the control device. The method comprises:
- connecting the control device to the remote configuring device,
- start configuration software on the remote configuring device,
- identify electric and/or electronic devices connected to the control device by running the discovery function of the configuration software,
- configure the control device with required functions for the identified electric and/or electronic devices, and safe the configuration in the relevant electric or electronic device in case of a stand-alone control device (distributed intelligence) and in the home automation system in case the control device is part of a home automation system (central intelligence).

Configuring the control device with required functions is according to the invention such that the required functions can be changed at any time.

According to embodiments of the invention, the method may furthermore comprise adapting default parameters for the selected functions for example when feedback is needed, level of feedback, dimmer parameter, ....

According to still further embodiments, the method may furthermore comprise adapting proposed sequences of appearance of the functions on the control device and choose and confirm the default first function the user wants to see whenever starting to use the control device.

### Brief description of the drawings

It has to be noted that same reference signs in the different figures refer to same, similar or analogous elements.
Fig. 1 to Fig. 3 illustrate dismounted perspective views of a control device according to different embodiments of the invention.
Fig. 4 schematically illustrates a stand-alone control device according to an embodiment of the invention.
Fig. 5 schematically illustrates a stand-alone control device according to an embodiment of the invention.
Fig. 6 schematically illustrates a control device that is part of a home automation system according to an embodiment of the invention.

### Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also includes indirect contact between part A and part B, in other words also includes the case where intermediate parts are present in between part A and part B.

Not all embodiments of the invention comprise all features of the invention. In the following description and claims, any of the claimed embodiments can be used in any combination.

The present invention provides a control device for controlling an electric or electronic device. The control device comprises a user input interface comprising a translucent front cover, a dynamic reconfigurable function indication means adapted for showing different information at different times and a user input means. The control device furthermore comprises controlling circuitry for controlling the electric or electronic device and means for connecting the control device to a remote configuring device for configuring the control device.

With dynamic is meant that a user can have access to, for example scroll through, the available functions on the function indication means, i.e. all available functions can be shown on the function indication means one after the other. Once a function is chosen and controlled, feedback can also be shown on the function indication means, such as, for example in case of a dimmer, the dimming level after controlling the dimmer function. So the "image" that is seen on the function indication means changes or can be changed in time and is not always the same.

With reconfigurable is meant that the function indication means can be reconfigured by an installer or a user at any time when it is desirable or required to change the functionalities or to add/remove functionalities without the need to make a change to the control device's hardware or to replace any parts of the control device.

With the dynamic reconfigurable function indication means being adapted for showing different information at different times is meant that it can show different functions at different times and/or it can show feedback on the status of these functions.

An advantage of a control device according to embodiments of the invention is thus that configuration of the control device is fully reversible. In other words, the design and/or the electronics of the control device do not have to be adapted when functionalities need to be changed, when new functionalities need to be added and/or when functionalities have to be replaced with an existing other one. Furthermore, there is no limit in the number of functionalities that can be configured in the control device. Hence, a control device according to embodiments of the invention can fit all control needs for a particular user.

Another advantage of a control device according to embodiments of the invention is that it is easy to install and only one product is needed for all required control needs, because, as already described above, the control device can be easily configured and reconfigured whenever necessary.

Hence, unlike prior art control devices, when the control needs change, no additional parts or new parts have to be bought for the control device. The control device can simply be reconfigured according to the changed needs.

The present invention will hereinafter be described by means of different embodiments. It has to be understood that these embodiments are only for the ease of understanding the invention and are not intended to limit the invention in any way.

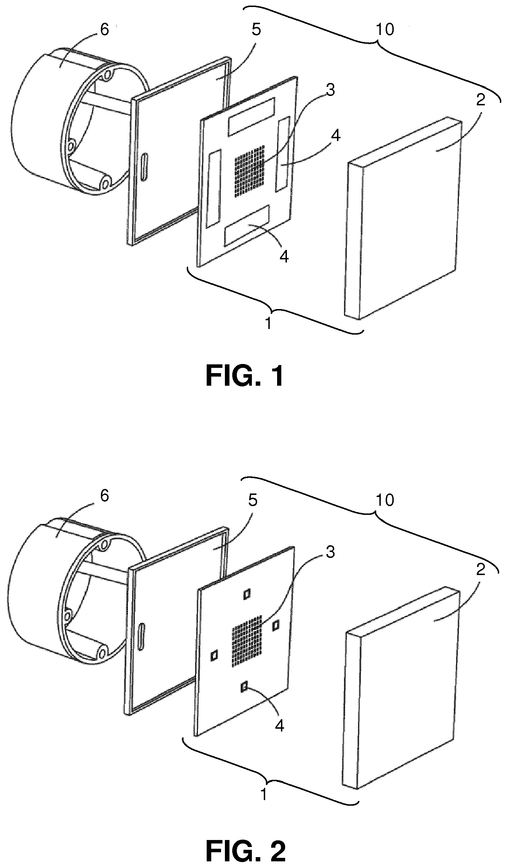

Fig. 1 illustrates a dismounted perspective view of a control device 10 according to an embodiment of the invention. The control device 10 comprises a user input interface 1 comprising a translucent front cover 2, a dynamic reconfigurable function indication means 3 and a user input means 4. The dynamic reconfigurable function indication means 3 may, according to the present embodiment, comprise a LED matrix. According to other embodiments of the invention, the dynamic reconfigurable function indication means 3 may be an LCD or an OLED LCD. The dynamic reconfigurable function indication means 3 is for showing the available functions, such as dimming, shutter control, heating and/or cooling control, ventilation control, ... to the user. A user can have access to, for example scroll through, these available functions and chose which one he wants to control. During or after the function is controlled, the function indication means 3 can also show feedback, for example in case of a dimmer, the dimming level during and/or after control.

Hence, the function indication means 3 may show what a user is doing while he is controlling the function. The function indication means 3 is thus dynamic because it does not just show one static view, but it can show different information at different times. Further, the function indication means 3 is reconfigurable at any time (see further).

In the example given, the user input means 4 may comprise four capacitive areas. This may also be inductive areas or resistive areas, or may be a different number of capacitive, inductive or resistive areas. The user input means 4 is for controlling the control device 10. Such capacitive, inductive or resistive areas 4 may be provided in a particular pattern to make it easier for the user to control.

They may, for example and as illustrated in Fig. 1, be provided around the LED matrix 3. For example, the areas above and under the LED matrix 3 may be used to scroll through the available functions while the areas at the right and left of the LED matrix may be used to control the chosen function, or vice versa.

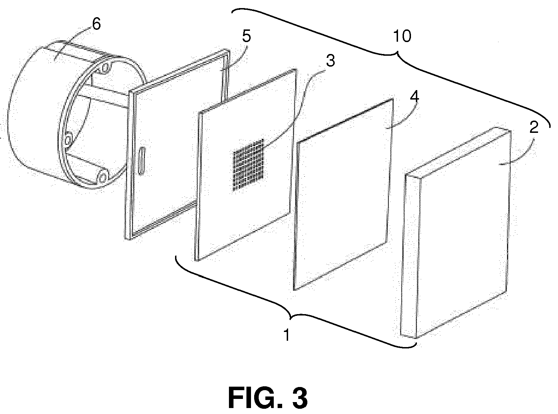

According to other embodiments of the invention, the user input interface 1 may, instead of comprising capacitive, inductive or resistive areas, for example comprise at least one tactile switch (see Fig. 2) or a touch layer in front of the LED matrix (see Fig. 3).

The control device 10 furthermore comprises controlling circuitry, e.g. control logic and switching.

This controlling circuitry may, depending on the type of control device 10, be located near the electric or electronic device, be integrated in the control device 10 or may be integrated in a home automation system (see further). The controlling circuitry comprises the electronics necessary for the control of the control device 10 and an interface towards a remote configuring device used for configuration of the control device 10, such as a computer, a mobile phone or a tablet (see further).

Furthermore, the control device 10 may comprise a back cover 5 for covering the back of the user input interface 1 and a mounting box 6 for flush mounting the control device 10 to a wall (see Figs. 1 to 3). In the examples given the mounting box 8 is illustrated as a round mounting box. However, this is not intended to limit the invention in any way, and it has to be understood by a person skilled in the art that this could also be a square or rectangular mounting box. Furthermore, according to other embodiments of the invention, the control device 10 does not comprise a mounting box 6 for building into a wall, but may be intended to be provided onto a wall. In that case, the control device 10 may, for example, comprise a frame for mounting onto the wall or may be directly attached to the wall by, for example, glue, double-sided tape or the like.

When touching or pressing the control device 10 for controlling an electric or electronic device, feedback may be provided such as, for example, a symbol, text, a number, ... may be shown. This feedback may be static or may be dynamic. In case of static feedback only the chosen function will be shown while in case of dynamic feedback besides the function also the status of the function will be shown. For example, in case of a dimmer where the dimmer is indicated by a lamp, the lamp can be shown as being filled more or less depending on the degree of dimming.

According to embodiments of the invention, the control device 10 may be a stand-alone control device. This means that it is directly coupled to the electric or electronic devices that is has to control. According to other embodiments of the invention, the control device 10 may be part of a home automation system.

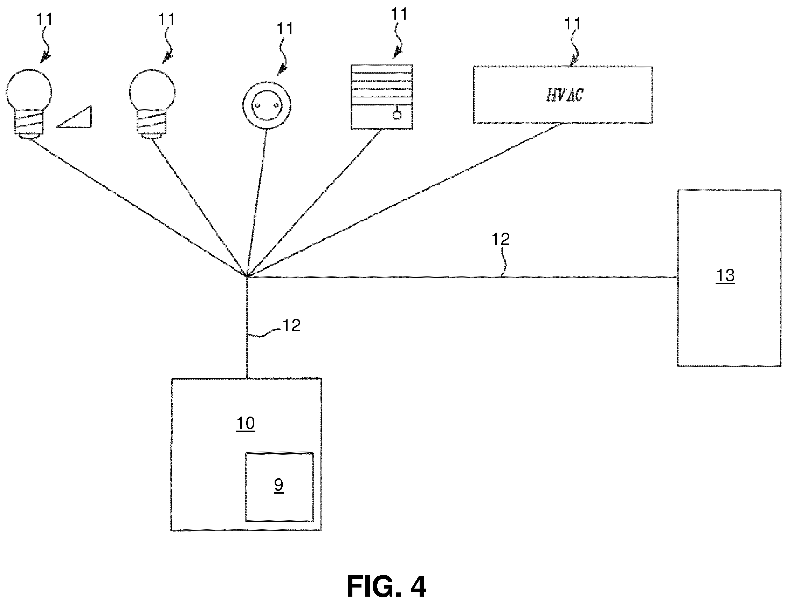

Fig. 4 schematically illustrates an embodiment of a stand-alone control device 10. According to this embodiment, the control logic 9 is integrated in the control device 10. In such cases, a switching element necessary for controlling the electric or electronic device 11 is integrated in the control device 10. An advantage hereof is that the control device is suitable for being used during renovation. The user simply has to replace, for example, an old switch by the control device 10 according to embodiments of the invention, in order to be able to control the functions of the electric or electronic devices 11 that he wants to control. The control device 10 is linked to the electric or electronic devices 11. This link may be wired or may be wireless. The control device 10 furthermore comprises means 12 for connecting to control device 10 to a remote configuring device 13 for configuring the control device 10, i.e. for defining the functions of the electric or electronic devices 10 it has to be able to control. The means 12 for connecting the control device 10 to the remote configuring device 13 may be wired or may be wireless. According to embodiments of the invention, the remote configuring device 13 may, for example, be a computer, a tablet, a mobile phone or any other suitable remote device known by a person skilled in the art.

The electric or electronic devices 11 may, for example, be a lamp, a switch, a socket, an HVAC, a roller blind, or any other electric or electronic device 11 that can be controlled by a control device 10.

It has to be noted that, once the control device 10 is configured with the required functions, the remote configuring device 13 may be removed. Whenever the control device 10 has to be reconfigured, the remote configuring device 13 may be connected again to the control device 10.

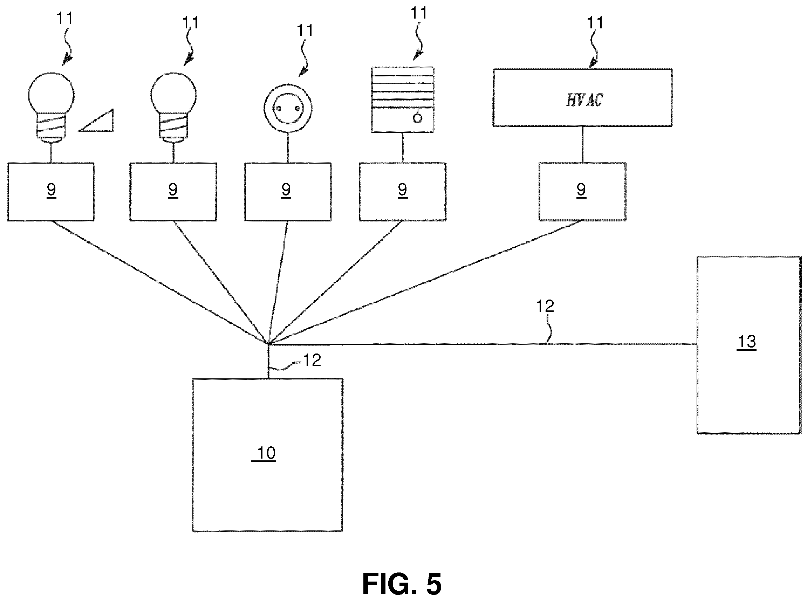

Fig. 5 schematically illustrates another embodiment of a stand-alone control device 10. The difference with the embodiment illustrated in Fig. 4 is that, according to the present embodiment, the control logic 9 is, contrary to the embodiment illustrated in Fig. 4, not part of the control device 10, but is located in or near the electric or electronic device 11 the control device 10 is controlling.

In such cases the switching element necessary for controlling the electric or electronic device 11 is integrated into the electric or electronic device 11, e.g. in a light bulb.

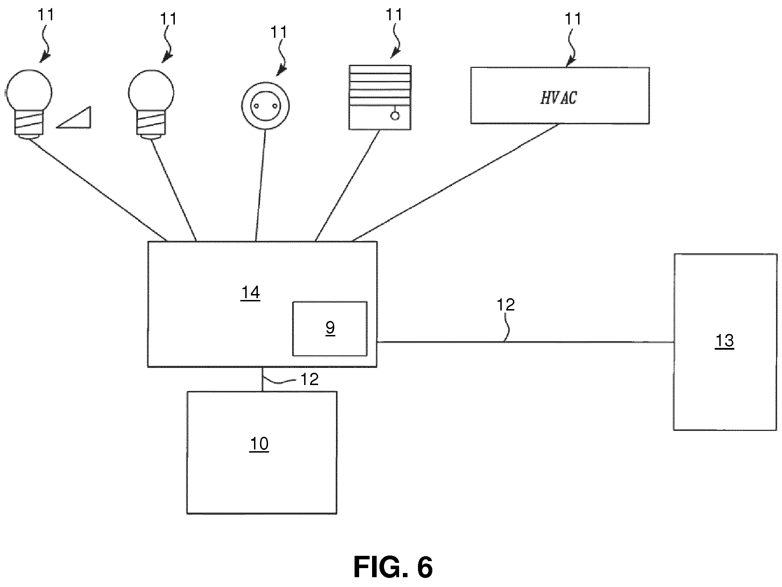

Fig. 6 schematically illustrates an embodiment of a control device 10 that is part of a home automation system 14. According to this embodiment, the control logic 9 is integrated in the home automation system 14. Configuration of the control device 10 occurs through the home automation system 14. Hence, according this embodiment, the control device 10 is connected to a remote configuring device 13 through the home automation system 14 and via a wired or wireless connection 12.

The present invention provides, in a second aspect, a method for configuring a control device 10 as described in the above embodiments. The method comprises in a first step connecting the control device 10 to the remote configuring device 13. This can be through a wired or through a wireless connection. Then, the configuration software, which is specifically designed for the control device 10 according to embodiments of the invention, on the remote configuring device 13 can be started.
In a next step, the electric and/or electronic devices 11 that are connected to the control device 10 are identified by running a discovery function of the configuration software. After identifying the electric and/or electronic devices 11, the new control is configured with the required functions for the identified electric and electronic devices 11. Configuring the control device with required functions is, according to the invention, such that the required functions can be changed at any time. Depending on the kind of control device 10, i.e. a stand-alone control device or a control device part of a home automation system, the configuration is then saved in the relevant electric or electronic device 11 in case of a stand-alone control device 10 (distributed intelligence) or in the home automation system in case the control device 10 is incorporated in a home automation system 14 (central intelligence).
According to embodiments of the invention, the method may furthermore comprise adapting default parameters for the selected functions, for example when feedback is needed, the level of feedback, dimmer parameters, ... Such feedback can be given on the control device 10 itself or can be given through the remote configuring device 13.
According to still further embodiments of the invention, the method may furthermore comprise adapting proposed sequences of appearance of the functions on the control device and choose and confirm the default first function the user wants to see whenever starting to use the control device.

## Claims

1. A control device (10) for controlling an electric or electronic device (11), the control device (10) comprising:
- a user input interface (1) comprising a translucent front cover (2) and a user input means (4),
- controlling circuitry (9) for controlling the electric or electronic device (11), and
- means (12) for connecting the control device (10) to a remote configuring device (13) for configuring the control device (10),
wherein the user input interface (1) furthermore comprises a dynamic reconfigurable function indication means (3) adapted for showing different information at different times.

2. A control device (10) according to claim 1, wherein the different information comprises different functions and/or feedback on the status of these functions.

3. A control device according to claim 1 or 2, wherein the dynamic reconfigurable function indication means (3) is a LED matrix, an LCD or an OLED LCD.

4. A control device (10) according to any of claims 1 to 3, wherein the user input means (4) comprises at least one capacitive area, at least one inductive area, at least one resistive area, at least one tactile switch or a touch layer.

5. A control device (10) according to any of the previous claims, wherein the remote configuring device (13) is a computer, a tablet or a mobile phone.

6. A control device (10) according to any of the previous claims, wherein the means (12) for connecting to the remote configuring device (13) is adapted to provide a wireless connection.

7. A control device (10) according to any of the previous claims, wherein the means (12) for connecting to the remote configuring device (13) is adapted to provide a wired connection.

8. A control device (10) according to any of the previous claims, wherein the control device (10) is a stand-alone device.

9. A control device (10) according to claim 8, wherein the controlling circuitry (9) is part of the control device (10).

10. A control device (10) according to claim 9, wherein the controlling circuitry (9) is located external to the control device (10) and is located in or near the electric or electronic device (11) to be controlled.

11. A control device (10) according to any claims 1 to 7, wherein the control device (10) is part of a home automation system (14).

12. A control device (10) according to claim 11, wherein the controlling circuitry (9) is incorporated in the home automation system (14).

13. Method for configuring a control device (10) for controlling an electric or electronic device (11), the control device (10) comprising a user input interface (1) comprising a translucent front cover (2), a dynamic reconfigurable function indication means (3) adapted for showing different information at different times and a user input means (4), controlling circuitry (9) for controlling the electric or electronic device (11), and means (12) for connecting to a remote configuring device (13) for configuring the control device (10), the method comprising:
- connecting the control device (10) to the remote configuring device (13),
- identifying the electric and/or electronic devices (11) connected to the control device (10), and
- configuring the control device (10) with required functions for the identified electric and/or electronic devices (11), and safe this configuration,
wherein configuring the control device with required functions is such that the required functions can be changed at any time.

14. Method according to claim 13, wherein the method furthermore comprises adapting default parameters for the selected functions.

15. Method according to claim 13 or 14, wherein the method furthermore comprises adapting proposed sequences of appearance of the functions on the control device (10) and choose confirm a default first function.
